# EUROPEAN PATENT APPLICATION

(11) **EP 2 463 938 A1**
(43) Date of publication of application: **13.06.2012**
(21) Application number: 10839471.9
(22) Date of filing: 22.12.2010
(51) Int. Cl.: H01M 2/34, H01M 2/02, H01M 2/04, H01M 2/10, H01M 2/30

(54) **BATTERY MODULE AND ASSEMBLED BATTERY**

(30) Priority: 24.12.2009 JP 2009292306
(71) Applicant: Mitsubishi Heavy Industries, Ltd., Tokyo 108-8215 (JP)
(72) Inventor: UCHIDA, Masataka, Tokyo 108-8215 (JP)
(74) Representative: HOFFMANN EITLE
(86) International application number: PCT/JP2010/073170
(87) International publication number: WO 2011/078241

(57) **Abstract**

A battery module of the invention includes: a battery (1) having a positive electrode terminal (11), a negative electrode terminal (12), and a battery case (10); a cap (3) having holes (31, 32) respectively corresponding to the positive electrode terminal (11) and the negative electrode terminal (12) and formed of an insulating member covering an end of the battery (1); and a protection portion to block at least one of the holes. When the cap (3) is pressed and inserted into the end of the battery up to a predetermined amount or more, the positive electrode terminal (11) or the negative electrode terminal (12) protrudes from the cap (3) through the protection portion.

## Description

### Technical Field

The present invention relates to a battery module and an assembled battery.
Priority is claimed on Japanese Patent Application No. 2009-292306, filed December 24, 2009, the content of which is incorporated herein by reference.

### Background Art of the Invention

Hitherto, an assembled battery including an electrical cell or a plurality of electrical cells has been used as power supplies of various devices. A secondary battery as one type of the electrical cell may be repeatedly charged or discharged, and is used as a power supply of an electronic device such as a cellular phone or a video camera, a power supply of an electric vehicle, a home electrical storage device, and the like.

In recent years, a lithium ion secondary battery, which may be simply referred to as LiB, has gained attention as a secondary battery. The LiB has features in that a high voltage is obtained, energy density is high, and columbic efficiency is high compared to other secondary batteries such as a lead storage battery. When the LiB is used, it is possible to decrease the number of the electrical cells connected to each other to obtain a predetermined voltage or capacity and to decrease the weight and the size of the device equipped with the LiB, thereby making miniaturization possible. As the LiB, for example, LiBs disclosed in Patent Documents 1 and 2 are acknowledged.

The LiB of Patent Document 1 has a structure including a positive and a negative electrode plates sandwiching a separator, that is received in a case storing electrolyte therein. At the outer surface of the case, there are a positive electrode terminal connected to the positive electrode plate and a negative electrode terminal connected to the negative electrode plate. Because the case is formed of an aluminic material, it is possible to realize a decrease in weight or an improvement in heat radiation efficiency. In such a LiB, when the stored electrolyte contacts the inner wall of the case, the aluminic material causes a reaction with lithium ions, and it is alloyed. In Patent Document 2, a case is electrically connected to a positive electrode terminal in order that the case is under the oxidation atmosphere. Accordingly, the inner wall of the case does not cause a reaction with lithium ions. Therefore, the case is prevented from alloying itself.

### PRIOR TECHNICAL DOCUMENTS

### Patent Documents

Patent Document 1: Japanese Patent Application, First Publication No. 2003-45498
Patent Document 2: Japanese Patent Application, First Publication No. 2008-186591

### DETAILED DESCRIPTION OF THE INVENTION

### Problems to be solved by the Invention

In a battery such as a first battery or a secondary battery, the positive electrode terminal and the negative electrode terminal may contact with the same scrap metal and they may be short-circuited to each other. In this case, a problem such as healing or charge loss may be generated in some cases. In particular, when the short-circuiting occurs in the secondary battery, the characteristics such as a charge rate may unexpectedly change. Therefore, the secondary battery may not be satisfactorily operated.

In the LiB of Patent Document 2, because the case is electrically connected to the positive electrode terminal, the surface area of the portion electrically connected to the positive electrode terminal is widened. Therefore, the short-circuit easily occurs in this case. For example, when the case in Patent Document 2 is short-circuited to another LiB, the potential of the case may changes and the case may be alloyed.

The invention is made in view of such circumstances, and it is an object to provide a battery module and an assembled battery that are able to prevent them from a short-circuit occurred in a battery or between a plurality of batteries.

### Structures for Solving the Problem

According to a first aspect of the invention, there is provided a battery module including: a battery having a positive electrode terminal, a negative electrode terminal, and a battery case; a cap having holes respectively corresponding to the positive electrode terminal and the negative electrode terminal and formed of an insulating member covering an end of the battery where the negative electrode terminal is formed; and a protection portion to block at least one of the holes. When the cap is pressed and inserted into the end of the battery up to a predetermined amount or more, the positive electrode terminal or the negative electrode terminal protrudes from the cap through the protection portion.

According to the first aspect of the invention, it is possible to protect the electrode terminal (i.e., the positive electrode terminal or the negative electrode terminal) until the cap is pressed and inserted up to a predetermined amount or more.

According to a second aspect of the invention, a battery module includes: first and second batteries each having a positive electrode terminal, a negative electrode terminal, and a battery case electrically connected to the positive electrode terminal; and first and second caps being formed of an insulating member. The first cap covers an end of the first battery, the second cap covers an end of the second battery, and the first and second caps are arranged to contact each other.

According to the second aspect of the invention, because the first and the second caps are arranged to contact each other when a plurality of batteries is arranged, it is possible to prevent an accident in which the battery cases charged to a positive potential are short-circuited to each other through a certain conductor (e.g., scrap metal), although a difference in potential may be present between the batteries.

An assembled battery includes: a package storing the battery modules according to first or second aspects; and an interconnection plate having a plurality of interconnections that are buried or printed. When the interconnection plate is fitted to the package, the positive electrode terminals and the negative electrode terminals of the battery modules are respectively and electrically connected to the corresponding interconnections to form a predetermined electrical connection.

### Advantageous Effects of the Invention

According to the invention, as described above, it is possible to prevent the short-circuit of the battery and of a plurality of batteries.

### Brief Description of Drawings

FIG. 1 is a perspective view illustrating an appearance of a battery module of a first embodiment.
FIG. 2 is an exploded perspective view illustrating a configuration of a secondary battery and a configuration of an electrical cell cover.
FIG. 3 is a cross-sectional view along the line A-A' of FIG. 2.
FIGS. 4A and 4B are side cross-sectional views illustrating a battery module of a second embodiment.
FIX. 5A is a perspective view illustrating an electrical cell cover of a battery module of a third embodiment, and FIG. 5B is a cross-sectional view illustrating the electrical cell cover.
FIGS. 6A to 6C are diagrams sequentially illustrating a method of using the electrical cell cover of the battery module of the third embodiment.
FIG. 7A is a cross-sectional view illustrating a first cap of a first modified example, and FIG. 7B is a plan view illustrating a first cap of a second modified example.
FIGS. 8A to 8C are side cross-sectional views illustrating an electrical cell cover of a battery module of a fourth embodiment.
FIGS. 9A to 9C are configuration diagrams illustrating a side cross-section of an electrical cell cover of a battery module of a fifth embodiment.
FIG. 10 is an exploded perspective view illustrating a configuration of an assembled battery including a plurality of battery modules according to a sixth embodiment.

### Description of Embodiments

Hereinafter, embodiments of the invention will be described by referring to the drawings. In the drawings used for description, the dimensions or scales of the drawings may be different from those of the real structure in order to clarify characteristic points. The same reference numerals will be given to the same components in the embodiments, and the detailed description thereof will not be repeated.

### (First Embodiment)

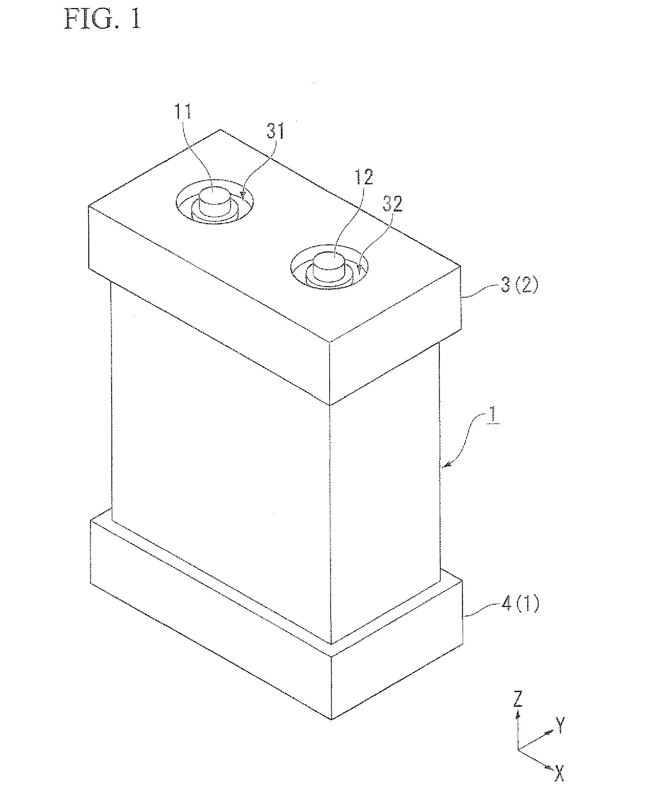

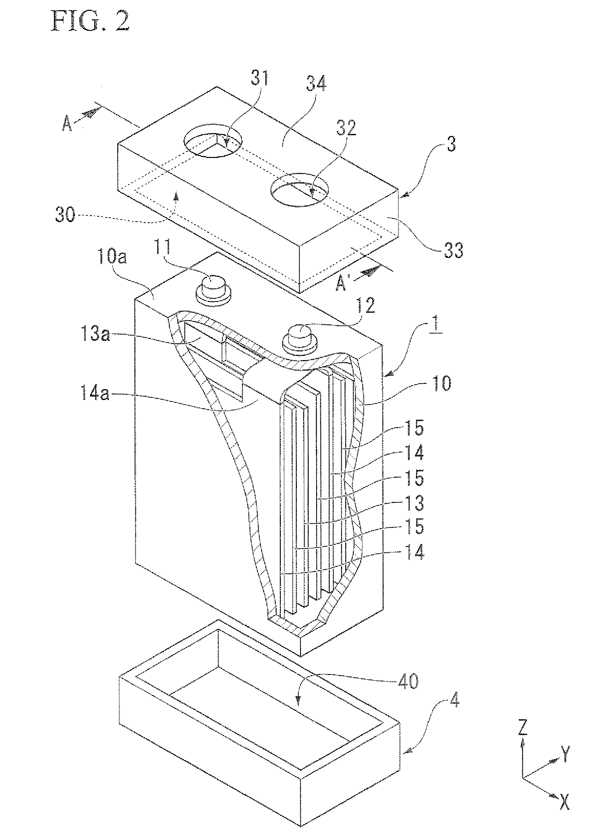

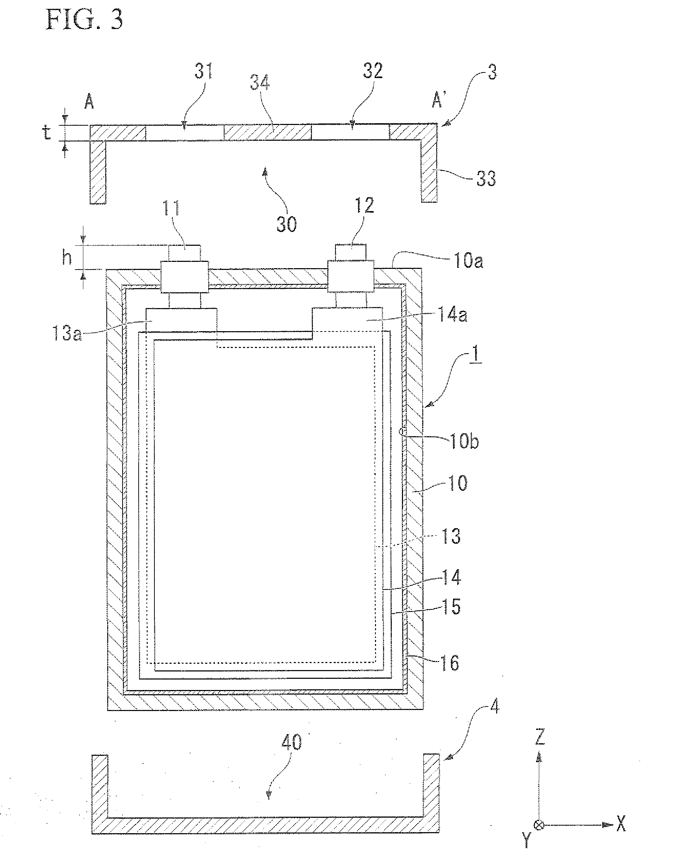

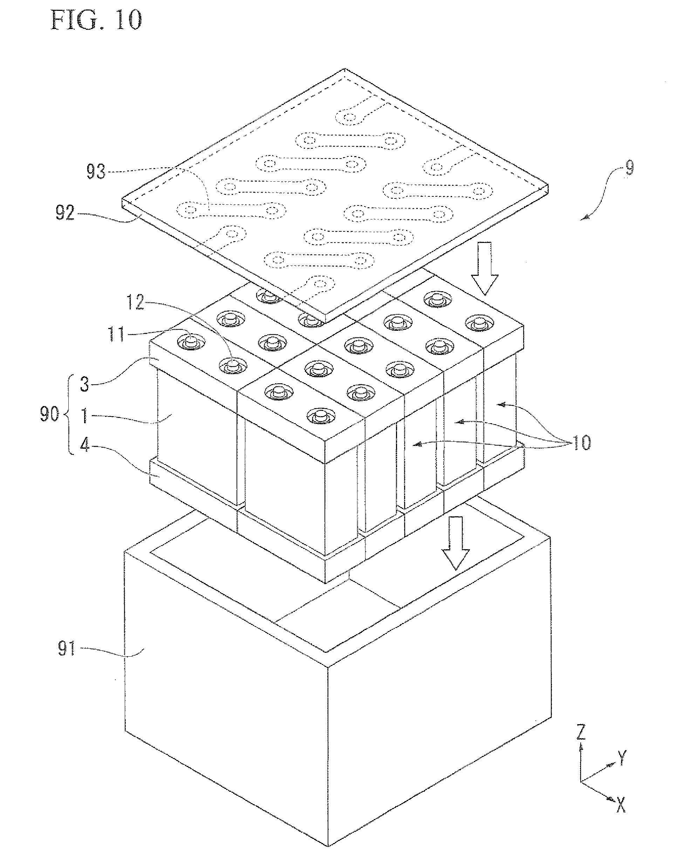

FIG. 1 is a perspective view illustrating a battery module of a first embodiment, FIG. 2 is an exploded perspective view illustrating a configuration of an electrical cell cover 2 and a secondary battery 1, and FIG. 3 is a cross-sectional view along the line A-A' of FIG. 2. As shown in FIG. 1, the battery module is formed by the electrical cell having the electrical cell cover attached thereto. Further, an assembled battery is formed by arranging a plurality of the battery modules or two-dimensionally arranging a plurality of the battery modules as shown in FIG. 10. Ahead of the description of the electrical cell cover, first, the configuration of the electrical cell will be described. Here, a stacked-type secondary battery is described, but the application range of the battery module of the invention is not limited to the internal structure of the electrical cell.

As shown in FIGS. 1 to 3, the secondary battery 1 as the electrical cell includes a battery case 10, and a positive electrode terminals 11 and a negative electrode terminal 12 as electrode terminals. The battery case 10 is made of metal (e.g., aluminium). The battery case 10 has a substantially prismatic shape (i.e., substantially rectangular parallelepiped shape), but may have a cylindrical shape. The positive electrode terminal 11 and the negative electrode terminal 12 are provided at a surface 10a which is one of the outer surfaces of the battery case 10. Each of the positive electrode terminal 11 and the negative electrode terminal 12 has a pillar or cylindrical shape, and protrudes in the direction perpendicular to the surface 10a. The positive electrode terminal 11 is electrically connected to the battery case 10 through a connection portion (e.g., a high resistor) which is not shown in the figures. The potential of the battery case 10 is controlled to be substantially equal to that of the positive electrode terminal 11 in order that the battery case 10 does not cause a reaction with lithium ions.

Hereinafter, the positional relationship of the components will be described on the basis of the XYZ coordinate system shown in FIG. 1. In the XYZ orthogonal coordinate system, the X and Y directions indicate the direction along the surface 10a, and the Z direction indicates the direction perpendicular to the surface 10a. Here, the arrangement direction of the positive electrode terminal 11 and the negative electrode terminal 12 are defined as the X direction. The negative electrode terminal 12 is arranged near the +X direction with respect to the positive electrode terminal 11.

Inside the battery case 10, the positive electrode plate 13 and the negative electrode plate 14 are repeatedly arranged in the Y direction. The positive electrode plate 13 is arranged to face the negative electrode plate 14. A separator 15 is provided between the positive electrode plate 13 and the negative electrode plate 14. Therefore, the positive electrode plate 13 is not in contact with the negative electrode plate 14. Each of the positive electrode plate 13 and the negative electrode plate 14 is formed of a conductive foil or a conductive sheet. The separator 15 is formed of, for example, an insulating material such as a resinous film.

The end of the negative electrode plate 14 in the Z direction is provided with a negative electrode tab 14a biased in the +X direction. The negative electrode tabs 14a of the plurality of the negative electrode plates 14 repeatedly arranged are integrally and electrically connected to the negative electrode terminal 12.
The end of the positive electrode plate 13 in the Z direction is provided with a positive electrode tab 13a biased in the -X direction. The positive electrode tabs 13a of the plurality of the positive electrode plates 13 repeatedly arranged are integrally and electrically connected to the positive electrode terminal 11.

The battery case 10 stores electrolyte containing lithium ions be in contact with the positive electrode plate 13 and the negative electrode plate 14. As the method of storing the electrolyte, liquid electrolyte may be stored inside the battery case 10 or solid electrolyte may be stored inside the battery case 10. Because the potential of the battery case 10 is controlled in order that lithium ions do not cause a reaction with the battery case 10, the alloying of the battery case 10 is prevented. In the battery case 10 of this example, an inner surface 10b of the battery case 10 is coated with an insulating film 16, in order that it is insulated from the electrolyte. Accordingly, the alloying is able to be prevented.

As shown in FIGS. 1 to 3, the battery module of the embodiment includes the electrical cell cover. A first cap 3 having a concave portion 30 and a second cap 4 having a concave portion 40 work as the electrical cell cover. The first cap 3 is attached to the secondary battery 1 from the +Z direction. At this time, the end of the secondary battery 1, which includes the surface 10a, is press-inserted into the concave portion 30 in order to be fitted thereinto. The second cap 4 is attached to the secondary battery 1 from the -Z direction. At this time, the end (hereinafter, referred to as a bottom surface) of the secondary battery 1 opposite to the surface 10a is fitted into the concave portion 40. The first cap 3 and the second cap 4 are fixed to the battery case 10 by an adsorption force or a friction force exerted with respect to the battery case 10 so as not to be separated from the battery case 10.

The first cap 3 and the second cap 4 are all formed of an insulating material. As a material of the first cap 3 or the second cap 4, for example, a material may be formed of resin, rubber, or the like, that are elastically deformable. When the elastically deformable material is used, the caps is able to be closely contacted to the secondary battery 1. Further, when the material such as resin or rubber is used, the first cap 3 or the second cap 4 may be efficiently formed by molding. Here, the first cap 3 and the second cap 4 are formed of silicon rubber.

The first cap 3 has a side portion 33 and a bottom portion 34, and these two portions are integrally formed with each other. The side portion 33 is formed in a substantial frame shape, and a portion surrounded by the side portion 33 is formed as the concave portion 30. The opening shape, which is a substantially rectangular shape here, of the concave portion 30 is set to be substantially equal to the external shape of the surface 10a. The inner dimension, which is the inner peripheral dimension, of the opening of the concave portion 30 is set to be substantially equal to the external dimension of the surface 10a.

The bottom portion 34 is a plate-like portion facing the surface 10a while the first cap 3 is attached to the secondary battery 1. The bottom portion 34 has holes 31 and 32. The holes 31 and 32 of the embodiment are formed as through-holes passing through the bottom portion 34. The positive electrode terminal 11 is positioned inside the hole 31 and the negative electrode terminal 12 is positioned inside the hole 32, when the first cap 3 is attached to the secondary battery 1. Here, a plate thickness "t" of the bottom portion 34 is set to be smaller than a terminal height "h". The front end of the positive electrode terminal 11 and the front end of the negative electrode terminal 12 protrude from the holes of the bottom position 34, when the secondary battery 1 is press-inserted into the first cap 3 as much as possible. And the bottom portion 34 comes into contact with the surface 10a.

When the electrical cell cover 2 with the above-described configuration is attached to the secondary battery 1, the side surface of the positive electrode terminal 11 is surrounded by the inner wall of the hole 31, and the side surface of the negative electrode terminal 12 is surrounded by the inner wall of the hole 32. Accordingly, the positive electrode terminal 11 and the negative electrode terminal 12 is able to be prevented from being short-circuited by a scrap metal (i.e.,a conductor) independent from the secondary battery 1.

The surface 10a excluding the peripheries of the positive electrode terminal 11 and the negative electrode terminal 12 is covered by the first cap 3. Accordingly, even when a scrap metal independent from the secondary battery 1 contacts the negative electrode terminal 12, it is possible to prevent the scrap metal from contacting the surface 10a, Therefore, when the battery case 10 is charged to a positive potential, it is possible to prevent the negative electrode terminal 12 from being short-circuited through the scrap metal.

Because the surface 10a of the secondary battery 1 excluding the electrode terminal is covered by the first cap 3 and the bottom surface of the battery case is covered by the second cap 4, the scrap metal independent from the secondary battery 1 does not easily contact the battery case 10 when the secondary battery 1 attached with the first cap 3 and the second cap 4 is placed thereon.
For example, any one of surfaces other than the terminal arrangement surface 10a is directed toward a surface of a table such as a working table. Because the side portion 33 of the first cap 3 or the second cap 4 forms a space between the surface of the battery case 10 and the surface of the working table, even when the surface of the working table has conductivity, it is possible to prevent the short-circuiting between the battery case 10 and the surface of the working table.

As described above, according to the battery module of the first embodiment, it is possible to prevent the short-circuit between the positive electrode terminal 11 and the negative electrode terminal 12, and prevent heating or charge loss caused by the short-circuit. Accordingly, it is possible to highly precisely manage the charge rate of the secondary battery 1 and operate the secondary battery 1 with satisfactory characteristics.

Further, it is possible to prevent the short-circuit between the negative electrode terminal 12 and the battery case 10 electrically connected to the positive electrode terminal 11 or the short-circuiting between the battery case 10 and the scrap metal independent from secondary battery 1. Accordingly, it is possible to control the potential of the battery case 10 to be a desired value, and prevent a reaction between the battery case 10 and lithium ions. Accordingly, it is possible to prevent a variation in characteristics due to the alloying of the battery case 10 or a variation in characteristics due to deterioration of electrolyte, and satisfactorily operate the secondary battery 1.

Further, according to the battery module of the first embodiment, because it is possible to prevent the short-circuit of the battery modules at the time of transporting or installing the battery module or assembling the assembled battery obtained by the combination of a plurality of battery modules, the handling property is satisfactory.

### (Second Embodiment)

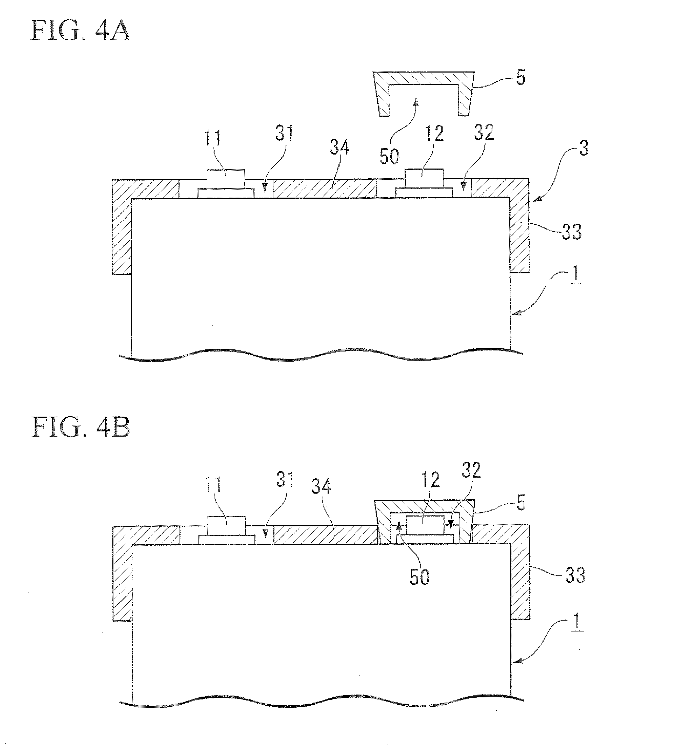

Next, referring to FIGS. 4A and 4B, the battery module according to the second embodiment will be described. FIG. 4A is a side cross-sectional view schematically illustrating a configuration of the electrical cell cover, and FIG. 4B is a diagram illustrating a method of using the electrical cell cover. FIG. 4A illustrates a part of the cross-section corresponding to FIG. 3.

As shown in FIGS. 4A and 4B, the battery module of the second embodiment is different from that of the first embodiment in that a third cap 5 is provided as a protection portion protecting the electrode terminal (i.e., the positive electrode terminal 11 or the negative electrode terminal 12) in order that the scrap metal does not adhere thereto. The third cap 5 is separably attached to the first cap 3 by being press-inserted into the hole 32. The third cap 5 includes a concave portion 50. The negative electrode terminal 12 is received inside the concave portion 50 so as not to be exposed to the outside, when the third cap 5 is attached to the first cap 3.

For example, the electrical cell cover of the second embodiment is used as below. First, the secondary battery 1 is prepared, the first cap 3 is attached to the secondary battery 1, and the third cap 5 is attached to the hole 32 near the negative electrode terminal of the first cap 3. Further, if necessary, the second cap 4 is attached to the secondary battery 1. Then, the secondary battery 1 having the electrical cell cover attached thereto is carried to a predetermined position and is installed at that position. Then, the third cap 5 is separated so as to expose the negative electrode terminal 12, and the positive electrode terminal 11 or the negative electrode terminal 12 is connected to a device or the like to operate the secondary battery 1.

In the battery module of the second embodiment, it is possible to cover the negative electrode terminal 12 by the third cap 5, and reliably prevent the short-circuiting of the negative electrode terminal 12 and the positive electrode terminal 11, the battery case 10, or the conductor independent from the secondary battery 1. When the third cap 5 is separated at the time of using the secondary battery 1, it is possible to expose the negative electrode terminal 12 to the outside and easily connect the negative electrode terminal 12 to the outside.
Furthermore, the third cap 5 may be attached so as to cover the positive electrode terminal 11, and the third cap 5 may be attached to each of the positive electrode terminal 11 and the negative electrode terminal 12.

### (Third Embodiment)

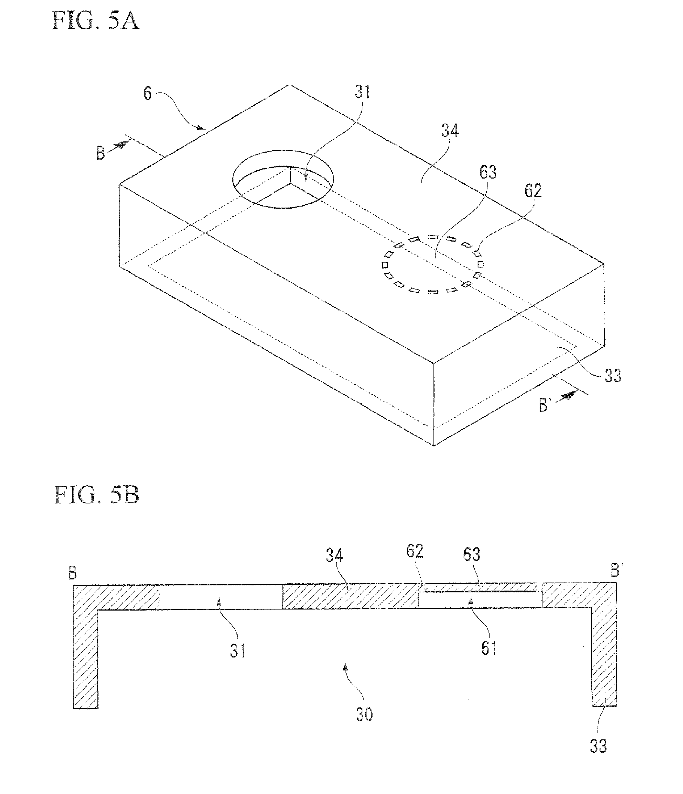

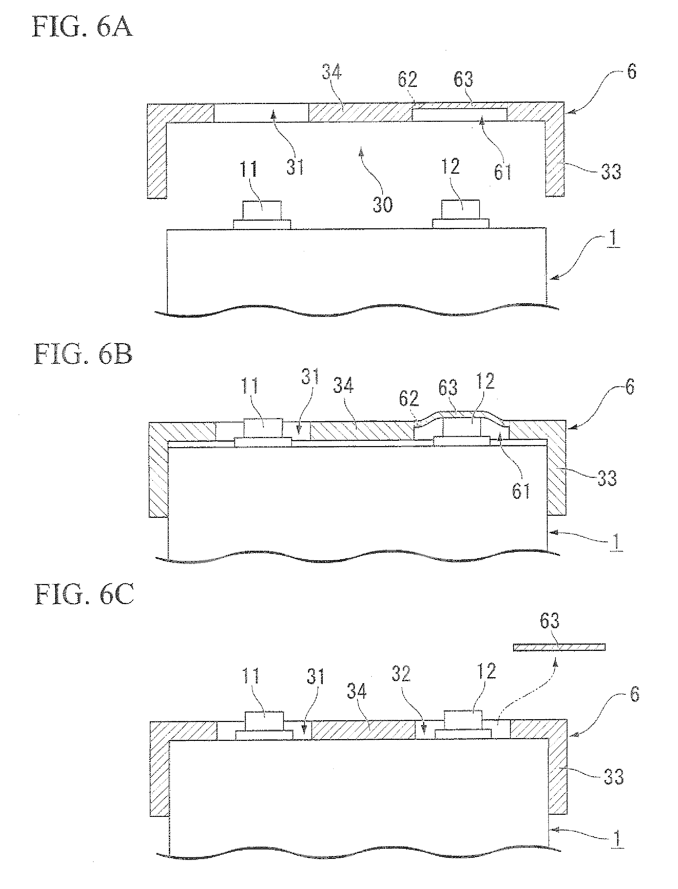

Next, referring to FIGS. 5A, 5B, 6A, 6B, and 6C, the battery module according to the third embodiment will be described. FIG. 5A is a perspective view schematically illustrating a configuration of the first cap constituting the electrical cell cover, FIG. 5B is a cross-sectional view along the line B-B' of FIG. 5A, and FIGS. 6A to 6C are diagrams illustrating a method of using the electrical cell cover.

As shown in FIGS. 5A and 5B, the battery module of the third embodiment includes a first cap 6 and the second cap 4 of the first embodiment. The first cap 6 of the third embodiment is different from that of the first embodiment in that the first cap 6 includes a protection portion 63 that protects the electrode terminal (particularly, the negative electrode terminal) in order that the scrap metal does not adhere thereto. The bottom portion 34 of the first cap 6 is provided with holes 31 and 61. The hole 61 is formed so as not to pass through the bottom portion 34, and the bottom portion of the hole 61 is formed as the protection portion 63. A fragile portion 62 is provided in the periphery (here, the peripheral edge of the protection portion 63) of a portion of the protection portion 63 contacting the front end of the negative electrode terminal 12.

The fragile portion 62 of the embodiment is formed in a perforated line shape in which a through-hole is intermittently provided, and is relatively fragile inside the protection portion 63. The first cap 6 is formed by molding, and the holes 31 and 61 and the fragile portion 62 are integrally formed by integral molding.

For example, the electrical cell cover of the third embodiment is used as below. First, the secondary battery 1 is prepared, and the electrode end with the negative electrode terminal 12 in the secondary battery 1 is press-inserted into the concave portion 30 of the first cap 6. When the electrode is pressed and inserted into the concave portion 30 deeply, the front end of the negative electrode terminal 12 reaches the protection portion 63. Here, the electrode end is press-inserted into the concave portion 30 to a degree that the protection portion 63 is not broken. The first cap 6 is temporarily fixed to the secondary battery 1 by a friction force between the first cap 6 and the battery case 10.

Then, the secondary battery 1 having the electrical cell cover temporarily fixed thereto is carried to a predetermined position, and is installed at that position. Then, the end of the battery is press-inserted into the concave portion 30 up to the maximal press-insertion amount. When the press-insertion amount becomes equal to or more than a predetermined value defined by the material of the first cap 6, the fragile portion 62 is broken due to the shear force exerted on the protection portion 63. Because the fragile portion 62 is broken, the protection portion 63 is cut off from the bottom portion 34 and is removed, therefrom, and the negative electrode terminal 12 is exposed. Then, the positive electrode terminal 11 or the negative electrode terminal 12 is connected to a device to operate the secondary battery 1.

In the battery module of the third embodiment, it is possible to cover the negative electrode terminal 12 by the protection portion 63, and reliably prevent the short-circuit of the negative electrode terminal 12 and the positive electrode terminal 11, the battery case 10, or the conductor independent from the secondary battery 1. When the protection portion 63 is cut off at the time of using the secondary battery 1, it is possible to expose the negative electrode terminal 12 to the outside and easily connect the negative electrode terminal 12 to the outside.

Furthermore, the protection portion 63 may be modified in various forms. For example, the protection portion 63 may be provided in the hole 31, and may be provided in each of the holes 31 and 32. At the time of using the secondary battery 1, the protection portion 63 may not be completely removed, but the negative electrode terminal 12 may be exposed to the outside while a part of the protection portion 63 is continuous to the first cap 6 such as when, for example, the protection portion 63 is turned over. Hereinafter, modified examples of the protection portion 63 will be described.

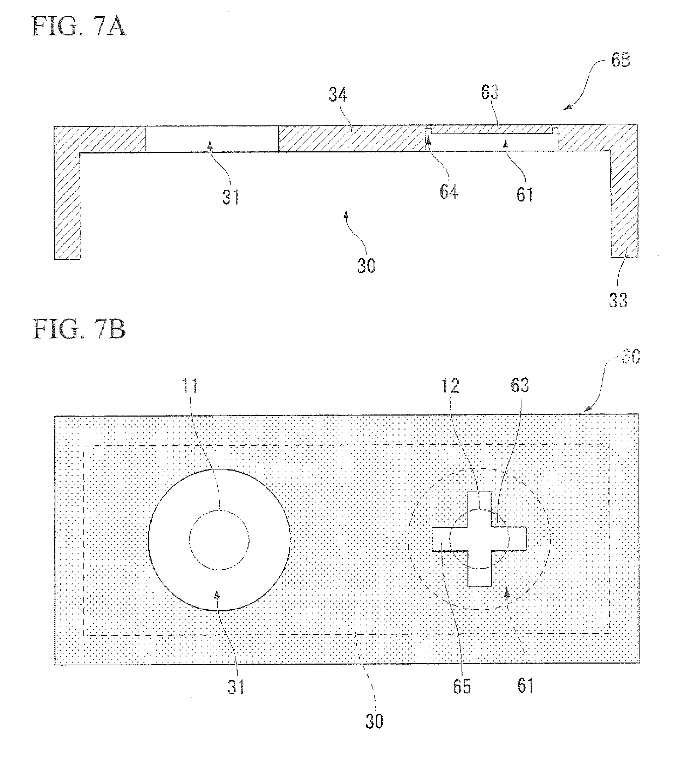

FIG. 7A is a cross-sectional view schematically illustrating a configuration of a first cap 6B of a first modified example, and FIG. 7B is a plan view illustrating a first cap 6C of a second modified example.
As shown in FIG. 7A. the peripheral edge of the protection portion 63 of the first cap 6B is formed as the fragile portion 62. The thickness of the fragile portion 62 is set to be thinner than the thickness of the protection portion 63 other than the fragile portion 62. Accordingly, the fragile portion 62 is relatively fragile inside the protection portion 63.

As shown in FIG. 7B, in the bottom portion of the hole 61 of the first cap 6C, there is a slit 64 passing through the bottom portion 34. Here, the slit 64 is formed in a substantial cross shape. The inner dimension of the slit 64 is set to be small to a degree that the negative electrode terminal 12 does not pass therethrough. The bottom portion of the hole 61 around the slit 64 is formed as the protection portion 63. Furthermore, the shape of the slit 64 is not limited to the substantial cross shape, but may be, for example, a circular shape or a polygonal shape such as a triangular shape.

When the electrode end of the secondary battery 1 is press-inserted into the concave portion of the first cap 6C with a press-insertion amount in which the front end of the negative electrode terminal 12 does not contact the protection portion 63, a part of the front end of the negative electrode terminal 12 is covered by the protection portion 63, so that it is protected from the outside. When the press-insertion amount increases, the protection portion 63 is pressed against the negative electrode terminal 12 to be deformed in the direction opposite to the negative electrode terminal 12, and the slit 64 is enlarged by the front end of the negative electrode terminal 12. Accordingly, it is possible to expose the negative electrode terminal 12 to the outside. Likewise, as the protection portion, a protection portion may be used which covers a part of the front end of the negative electrode terminal 12 or is used without being cut off from the first cap.

### (Fourth Embodiment)

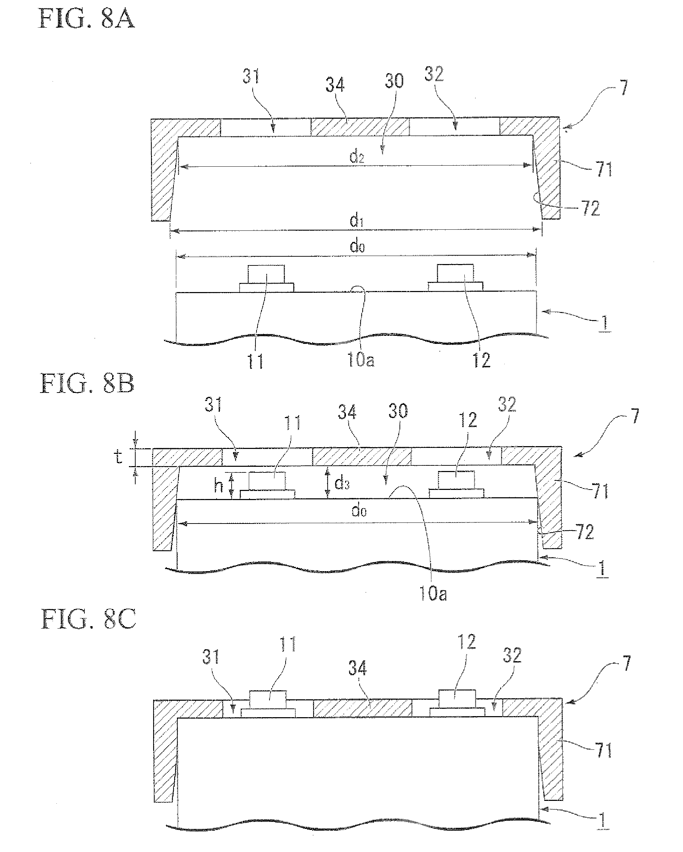

Next, referring to FIGS. 8A to 8C, the battery module according to the fourth embodiment will be described. FIG. 8A is a side cross-sectional view schematically illustrating a configuration of the electrical cell cover, and FIGS. 8B and 8C are diagrams illustrating a method of using the electrical cell cover. FIG. 8A illustrates a part of the cross-section corresponding to FIG. 3.

As shown in FIGS. 8A to 8C, the electrical cell cover of the fourth embodiment includes a first cap 7 and the second cap 4 of the first embodiment. The first cap 7 is different from that of the first embodiment in that an inner wall 72 of the concave portion 30 of the first cap 7 is formed in a tapered shape. The inner wall 72 is a portion contacting the concave portion 30 in the side portion 71 of the first cap 7. The inner dimension "d₁"of the opening of the inner wall 72 as the dimension of the inner periphery of the opening of the concave portion 30 is set to be larger than the inner dimension "d₂"of the bottom portion of the inner wall 72 as the dimension of the inner periphery of the concave portion 30 at the boundary with the bottom portion 34. When the dimension of the outer periphery of the terminal arrangement surface 10a of the battery case 10 is defined as the external dimension "d₀"of the end of the battery, the dimension "d₁"is set to be larger than the dimension "d₀"and the dimension "d₂"is set to be less than the dimension "d₀". That is, the relationship of d₂<d₀<d₁ is established.

In the state where the end of the battery is press-inserted into the first cap 7 until the dimension of the inner periphery of the inner wall 72 is substantially equal to the external dimension "d₀"of the end of the battery, the gap between the bottom portion 34 and the terminal arrangement surface 10a is defined as "d₃"(refer to FIG. 8B). For the shape of the inner wall 72, the relationship of "d₃+t>h" is established between the gap "d₃", the terminal height "h", and the plate thickness "t" of the bottom portion 34. That is, in the state where the end of the battery is press-inserted into the first cap 7 until the terminal arrangement surface 10a contacts the inner wall 72, the positive electrode terminal 11 and the negative electrode terminal 12 do not protrude from the first cap 7 through the hole.

For example, the electrical cell cover of the fourth embodiment is used as below. First, the secondary battery 1 is prepared, and the electrode end including the negative electrode terminal 12 in the secondary battery 1 is press-inserted into the concave portion 30 of the first cap 7. Here, the electrode end is press-inserted until the entire outer periphery of the terminal arrangement surface 10a contacts the inner wall 72, and is further press-inserted to a degree that the front end of the negative electrode terminal 12 does not pass through the hole 32. Accordingly, the inner wall 72 is pressed by the end of the battery to be widened, and the end of the battery is fastened to the side portion 71. Therefore, the first cap 7 is temporarily fixed to the secondary battery 1.

Then, the secondary battery 1 having the electrical cell cover temporarily fixed thereto is carried to a predetermined position and is installed at that position. Then, the positive electrode terminal 11 and the negative electrode terminal 12 are exposed by press-inserting the end of the battery into the concave portion 30 up to the maximal press-insertion amount, and the positive electrode terminal 11 or the negative electrode terminal 12 is connected to a device to operate the secondary battery 1.

In the battery module of the fourth embodiment, because the negative electrode terminal 12 does not pass through the hole, that is, the negative electrode terminal 12 does not protrude from the first cap 7 while the first cap 7 is temporarily fixed, it is possible to reliably prevent the negative electrode terminal 12 and the battery case 10 from connecting each other, through the scrap metal independent from the secondary battery 1. Further, since the first cap 7 is temporarily fixed to the secondary battery 1 due to the elastic force of the side portion 71, the separation of the first cap 7 is prevented. When the press-insertion amount increases at the time of using the secondary battery 1, it is possible to make the negative electrode terminal 12 protrude from the first cap 7 in order that the first cap 7 is fixed to the secondary battery 1 and easily connect the negative electrode terminal 12 to the outside.
In the battery module of the fourth embodiment, the short-circuit of the negative electrode terminal 12 is prevented and the separation of the first cap 7 is prevented, the handling property remarkably improves.

### (Fifth Embodiment)

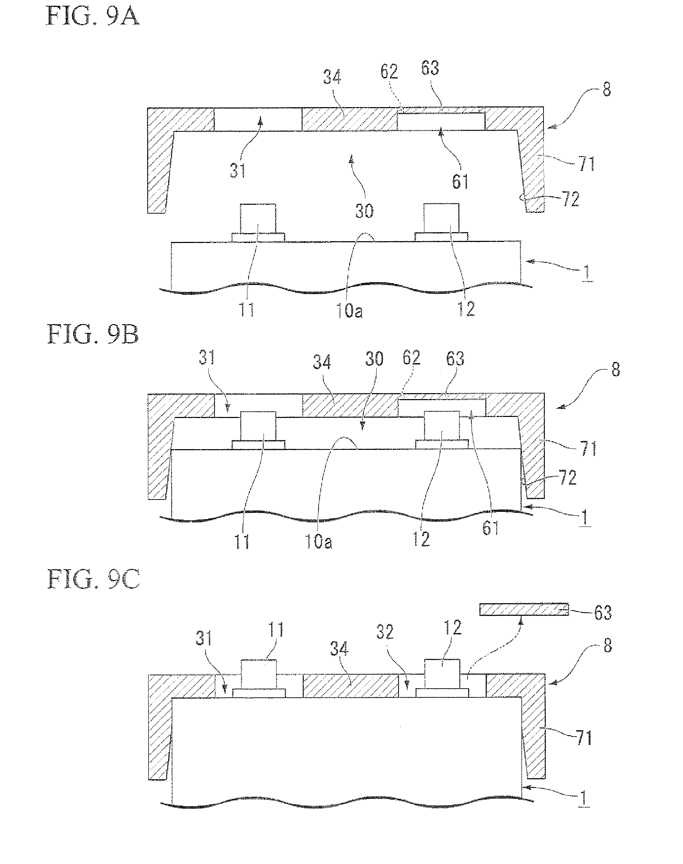

Next, referring to FIGS. 9A to 9C, the battery module according to the fifth embodiment will be described. FIG. 9A is a side view schematically illustrating a configuration of the electrical cell cover, and FIGS. 9B and 9C are diagrams illustrating a method of using the electrical cell cover. FIG. 9A illustrates a part of the cross-secti.on corresponding to FIG. 3.

As shown in FIGS. 9A to 9C, the electrical cell cover of the fifth embodiment is different from that of the fourth embodiment in that the first cap 8 includes the protection portion 63. The protection portion 63 is the same as that of the third embodiment (refer to FIG. 5).

In the bottom portion 34 of the first cap 8, there are the holes 31 and 61. The hole 61 is formed so as not to pass through the bottom portion 34, and the bottom portion of the hole 61 is formed as the protection portion 63. At the peripheral edge of the protection portion 63, there is the fragile portion 62. The inner wall 72 of the concave portion 30 of the first cap 8 is formed in a tapered shape as in the fourth embodiment.

For example, the electrical cell cover of the fifth embodiment is used as below. First, the secondary battery 1 is prepared, and the electrode end including the negative electrode terminal 12 in the secondary battery 1 is press-inserted into the concave portion 30 of the first cap 8. Here, the electrode end is press-inserted until the entire outer periphery of the terminal arrangement surface 10a contacts the inner wall 72, and is further press-inserted to a degree that the front end of the negative electrode terminal 12 does not contact the protection portion 63. The end of the battery is fastened by the side portion 71. Therefore, the first cap 8 is temporarily fixed to the secondary battery 1.

Then, the secondary battery 1 having the electrical cell cover temporarily fixed thereto is carried to a predetermined position and is installed at that position. Then, the front end of the negative electrode terminal 12 is pressed against the protection portion 63 by increasing the amount for pressing and inserting. The fragile portion 62 around the protection portion 63 is broken by the shear force. Then, the negative electrode terminal 12 is exposed by removing the protection portion 63, and the positive electrode terminal 11 or the negative electrode terminal 12 is connected to a device to operate the secondary battery 1.

In the battery module of the firth embodiment, because the negative electrode terminal 12 is covered by the protection portion 63 so as not to be exposed to the outside while the first cap 8 is temporarily fixed, it is possible to reliably prevent the short-circuit of the negative electrode terminal 12 and the battery case 10, the positive electrode terminal 11, and the conductor independent from the secondary battery. Even when the first cap 8 is temporarily fixed to the secondary battery 1, due to the elastic force of the side portion 71, the first cap 8 does not come off from the secondary battery 1. When the secondary battery 1 is used, the fragile portion 62 is broken to remove the protection portion 63. Therefore, the negative electrode terminal 12 passes through the hole to protrude from the first cap 8. Accordingly, it is possible to easily connect the negative electrode terminal 12 to an outside devise of which the electrical power is supplied from the secondary battery 1.

### (Sixth Embodiment)

Next, referring to FIG. 10, the assembled battery according to the sixth embodiment will be described. FIG. 10 is an exploded perspective view schematically illustrating a configuration of an assembled battery 9 of the sixth embodiment. As shown in FIG. 10, the assembled battery 9 includes a plurality of battery modules 90, a package (i.e., an assembled battery case) 91, and an interconnection plate 92. As the electrical cell cover of the battery module 90, any one of the electric cell covers described in the first to fifth embodiments may be used. Here, the electric cell cover of the first embodiment is adopted. The battery module 90 includes the secondary battery 1, the first cap 3, and the second cap 4.

The plurality of battery modules 90 of the embodiment is received in the package 91 and arranged in two-dimensions. It is desirable that the package 91 be formed of an insulating material. As the insulating material, a plastic resin is desirable for molding and forming the shape of the package 91 easily. The package 91 works as a frame that fixes the relative positions of the plurality of battery modules 90. Further, the first cap 3 and the second cap 4 are used as spacers between the adjacent battery modules 90 when the battery modules 90 are arranged. Therefore, the electrical short-circuit between the adjacent battery modules is able to be prevented. Further, because a pair of the first and the second caps do not cover a corresponding battery case entirely, a heat radiation is expected to occur effectively. In the embodiment, the plurality of battery modules 90 are arranged in order that the protrusion directions of the positive electrode terminal 11 and the negative electrode terminal 12 are evenly arranged in the plurality of battery modules 90.

The interconnection plate 92 is provided to contact the positive electrode terminal 11 and the negative electrode terminal 12 of the plurality of battery modules 90. The interconnection plate 92 is formed of the same insulating material as that of the package 91. Here, a plurality of interconnections 93 is arranged in the interconnection plate 92 with being buried or printed. Here, each of the interconnections 93 is used to electrically connect the positive electrode terminal 11 of one battery module 90 to the negative electrode terminal 12 of the battery module 90 adjacent to the battery module 90 in the Y direction. That is, the battery modules 90 arranged in one arrangement direction (e.g., the Y direction) are connected to each other in series. The interconnection plate 92 may also serve as the cover of the package 91. In this case, the interconnection plate 92 and the package 91 are fitted to each other. Therefore, the plurality of battery modules 90 are received in a sealed state. When the interconnection plate 92 is fitted to the package 91, the positive electrode terminals and the negative electrode terminals of the plurality of battery modules 90 are automatically and electrically connected to the respective predetermined positions of the plurality of interconnections 93.

In the assembled battery 9 with the above-described configuration, as described above in the first to fifth embodiments, the short-circuit of the battery module 90 is prevented. Further, the contact and the short-circuit between the battery cases 10 of the plurality of battery modules 90 or the short-circuit between the battery case of a certain battery module 90 and the negative electrode terminal 12 of another battery module 90 is prevented. Accordingly, for example, when the positive electrode and the battery case of the lithium ion secondary battery are connected to each other through the connection portion so as to have the same potential, degradation of the characteristics of the battery module 90 caused by the alloying of the battery case 10 is prevented, and a difference between the characteristics of the plurality of battery modules 90 is reduced. Because the degradation of the characteristics of the battery module 90 is prevented, the characteristics of the assembled battery 9 become satisfactory as a whole. Further, because a difference between the characteristics of the battery modules is reduced, it is possible to highly precisely manage the charge rate of each battery module 90 and obtain satisfactory characteristics of the assembled battery 9 as a whole.

Furthermore, the technical scope of the invention is not limited to the above-described embodiments. Various modifications may be made within the scope of the concept of the invention.
For example, the electrical cell cover may include at least the first cap. Even when the second cap is not provided, it is possible to prevent the short-circuit of the electrode terminal by using the first cap. The electrical cell cover may include various accessories other than the cap. Examples of the various accessories include a member connecting the first cap and the second cap to each other, an insulating tape having one end connected to the first cap and the other end connected to the second cap, and the like. Through such a connection, it is possible to prevent any one of the first cap and the second cap from being separated from the battery case.
As the first cap, a cap may be used in which the secondary battery is attached to at least the end of the battery. When the electrical cell cover is used in the usage state where the heat radiation of the secondary battery 1 is not regarded as important, the side portion of the first cap may cover the entire side portion of the battery case.
When a connection portion is provided outside the battery case 10 so as to electrically connect the battery case 10 to the positive electrode terminal 11, if necessary, an escape portion of the connection portion may be provided in the first cap.
The thickness of the bottom portion 34 may be adjusted in order that the electrode terminal does not pass through the hole. That is, the front end of the positive electrode terminal or the front end of the negative electrode terminal does not protrude from the first cap while the first cap is attached to the secondary battery. In this case, for example, at the time of connecting the positive electrode terminal to the outside device, the positive electrode terminal may be electrically connected to the outside device through a connection component having a connection terminal inserted into the hole of the first cap. The connection of the negative electrode terminal is the same as that of the positive electrode terminal.

### Description of the Reference Symbols

- 1:: SECONDARY BATTERY (ELECTRICAL CELL)
- 2:: ELECTRICAL CELL COVER
- 3:: FIRST CAP (CAP)
- 4:: SECOND CAP
- 5:: THIRD CAP (PROTECTION PORTION)
- 6, 6B, 6C, 7, 8:: FIRST CAP
- 9:: ASSEMBLED BATTERY
- 10:: BATTERY CASE
- 10a:: TERMINAL ARRANGEMENT SURFACE
- 10b:: INNER SURFACE
- 11:: POSITIVE ELECTRODE TERMINAL
- 12:: NEGATIVE ELECTRODE TERMINAL
- 13:: POSITIVE ELECTRODE PLATE
- 13a:: POSITIVE ELECTRODE TAB
- 14:: NEGATIVE ELECTRODE PLATE
- 14a:: NEGATIVE ELECTRODE TAB
- 15:: SEPARATOR
- 16:: INSULATING FILM
- 30:: CONCAVE PORTION
- 31, 32:: HOLE
- 33:: SIDE PORTION
- 34:: BOTTOM PORTION
- 40, 50:: CONCAVE PORTION
- 61:: HOLE
- 62:: FRAGILE PORTION
- 63:: PROTECTION PORTION
- 64:: SLIT
- 71:: SIDE PORTION
- 72:: INNER WALL
- 90:: BATTERY MODULE
- 91:: PACKAGE
- 92:: INTERCONNECTION PLATE
- 93:: INTERCONNECTION
- d₀:: EXTERNAL DIMENSION
- d₁:: INNER DIMENSION OF OPENING
- d₂:: INNER DIMENSION OF BOTTOM PORTION
- d₃:: GAP
- h:: TERMINAL HEIGHT
- T:: PLATE THICKNESS

## Claims

1. A battery module comprising:
a battery having a positive electrode terminal, a negative electrode terminal, and a battery case;
a cap having holes respectively corresponding to the positive electrode terminal and the negative electrode terminal and formed of an insulating member covering an end of the battery where the negative electrode terminal is formed; and
a protection portion to block at least one of the holes,
wherein the positive electrode terminal or the negative electrode terminal protrudes from the cap through the protection portion, when the cap is pressed and inserted into the end of the battery up to a predetermined amount or more.

2. The battery module according to claim 1, wherein
the protection portion includes a fragile portion that is integrally molded with the cap and is fragile, and the fragile portion makes the positive electrode terminal or the negative electrode terminal easily protrude from the cap.

3. A battery module comprising:
first and second batteries each having a positive electrode terminal, a negative electrode terminal, and a battery case electrically connected to the positive electrode terminal; and
first and second caps being formed of an insulating member,
wherein the first cap covers an end of the first battery, the second cap covers an end of the second battery, and the first and the second caps are arranged to contact each other.

4. The battery module according to claim 3, wherein
each of the first and the second caps further includes holes for the corresponding positive electrode terminal and the corresponding negative electrode terminal, and a protection portion arranged at the hole corresponding to at least the negative electrode terminal, and
wherein the negative electrode terminal protrudes from the corresponding cap through the protection portion, when the corresponding cap is pressed and inserted into the end of the corresponding battery up to a predetermined amount or more.

5. The battery module according to claim 4, wherein
the protection portion includes a fragile portion that is integrally molded with the corresponding cap and is fragile, and the fragile portion makes the corresponding negative electrode terminal easily protrude from the corresponding cap.

6. An assembled battery comprising:
a package storing the battery modules according to claim 1 or 2 that are two-dimensionally arranged; and
an interconnection plate having a plurality of interconnections that are buried or printed,
wherein the positive electrode terminals and the negative electrode terminals of the battery modules are respectively and electrically connected to the corresponding interconnections to form a predetermined electrical connection, when the interconnection plate is fitted to the package.

7. An assembled battery comprising:
a package storing the battery modules according to any one of claims 3 to 5 that are two-dimensionally arranged; and
an interconnection plate having a plurality of interconnections that are buried or printed,
wherein the positive electrode terminals and the negative electrode terminals of the battery modules are respectively and electrically connected to the interconnections to form a predetermined electrical connection, when the interconnection plate is fitted to the package.
